# EUROPEAN PATENT APPLICATION

(11) **EP 4 597 991 A1**
(43) Date of publication of application: **06.08.2025**
(21) Application number: 23873184.8
(22) Date of filing: 27.09.2023
(51) Int. Cl.: H04L 69/18, H04W 88/10, G06F 13/38

(54) **HYBRID COMMUNICATION DEVICE**

(30) Priority: 29.09.2022 KR 20220124184
(71) Applicant: Amosense Co.,Ltd, Chungcheongnam-do 31040 (KR)
(72) Inventor: PARK, Heungsoo, Cheonan-si, Chungcheongnam-do 31040 (KR); LIM, Jongho, Cheonan-si, Chungcheongnam-do 31040 (KR)
(74) Representative: Zimmermann, Tankred Klaus
(86) International application number: PCT/KR2023/014972
(87) International publication number: WO 2024/072073

(57) **Abstract**

Proposed is a hybrid communication device that enables multiple indoor and outdoor communications in association with an existing access point (AP) without a separate network construction. The proposed device is a hybrid communication device connected to an access point and includes a first communication module that receives a first signal from an external device by using a first communication method and transmits the received first signal to the access point by using the first communication method, a second communication module that receives a second signal from the external device by using a second communication method and transmits the received second signal to the access point by using the second communication method, and a third communication module that receives a third signal from the external device by using a third communication method and transmits the received first signal to the access point by using the third communication method.

## Description

### [Technical Field]

Embodiments of the present disclosure relate to a hybrid communication device, and more particularly, to a USB type hybrid communication device.

### [Background Art]

In relation to Internet of medical things (IoMT) for digital health care, a service is being proposed to enable location tracking, biometric data (medical data) collection, or the like for patients present at home or a certain location (for example, a hospital). Such a service enables the collection of location information, biometric data, or the like provided from various health care devices.

Such a service can be implemented using a predetermined communication network. The communication network may include a Bluetooth low energy (BLE) network, a LoRa network, a WiFi network, or the like.

However, in order to implement such a communication network, since a corresponding installation construction needs to be performed, significant construction costs are required.

In addition, when an existing communication network is to be changed to a new communication network, since the new communication network needs to be installed after the existing communication network is removed, more construction costs are required.

The contents described in the Background Art are to help the understanding of the background of the disclosure, and may include contents that are not a disclosed conventional technology.

### [Disclosure]

### [Technical Problem]

The present disclosure has been proposed in consideration of the aforementioned circumstances, and an object of the present disclosure is to provide a hybrid communication device that enables multiple indoor and outdoor communications in association with an existing access point (AP) without a separate network construction.

### [Technical Solution]

A hybrid communication device according to embodiments of the present disclosure is a hybrid communication device connected to an access point and includes: a first communication module configured to receive a first signal from an external device by using a first communication method, and to transmit the received first signal to the access point by using the first communication method; a second communication module configured to receive a second signal from the external device by using a second communication method, and to transmit the received second signal to the access point by using the second communication method; and a third communication module configured to receive a third signal from the external device by using a third communication method, and to transmit the received third signal to the access point by using the third communication method, wherein the hybrid communication device is formed in a form of a USB-type dongle.

As the connection is made, the first communication module may be activated upon receiving power from the access point and may transmit the first signal to the access point.

As the connection is made, the second communication module may be activated upon receiving power from the access point and may transmit the second signal to the access point.

As the connection is made, the third communication module may be activated upon receiving power from the access point and may transmit the third signal to the access point.

The access point may include a USB port, and the hybrid communication device may additionally include a connector that connects the first communication module, the second communication module, and the third communication module to the USB port.

As the connector is connected to the USB port, the connector may transmit power from the access point to the first communication module, the second communication module, and the third communication module, and transmit one or more of the first signal, the second signal, and the third signal to the access point.

The connector may include: a first connector configured to transmit the power from the access point to the first communication module and transmit the first signal to the access point as the connector is connected to the USB port; a second connector configured to transmit the power from the access point to the second communication module and transmit the second signal to the access point as the connector is connected to the USB port; and a third connector configured to transmit the power from the access point to the third communication module and transmit the third signal to the access point as the connector is connected to the USB port.

The first communication method may be a low-power wide area (LPWA)-based communication method, the second communication method may be a Bluetooth low energy (BLE)-based communication method, and the third communication method may be an ultra-wideband (UWB)-based communication method.

When the first signal is received from the first communication module, the access point may transmit the received first signal to a cloud server by using a WiFi communication method, when the second signal is received from the second communication module, the access point may transmit the received second signal to an integrated database management system by using the WiFi communication method, and when the third signal is received from the third communication module, the access point may transmit the received third signal to the integrated database management system by using the WiFi communication method.

### [Advantageous Effects]

According to the present disclosure having such a configuration, a USB-type dongle-shaped device including a plurality of communication modules is connected to an existing access point (for example, a WiFi router), thereby enabling multiple indoor and outdoor communications in association with an existing access point.

When a USB-type dongle-shaped hybrid communication device is connected (inserted) to an access point installed in advance, since multiple communications are simply possible, there is no need to additionally construct an infrastructure for multiple communications, and thus additional construction costs can be eliminated.

On the other hand, a hybrid communication device according to an embodiment of the present disclosure adopts an LPWA (for example, SIGFOX)-based communication method, a BLE-based communication method, and a UWB-based communication method, and since SIGFOX requires no pairing, an unpairing problem of BLE can be solved.

When a USB-type dongle-shaped hybrid communication device according to an embodiment of the present disclosure is used, realtime location tracking can be mainly performed through BLE and UWB and data communication can be mainly performed through LPWA, so that indoor realtime location tracking and data communication can be performed without difficulty.

In particular, a first communication module uses an LPWA (for example, SIGFOX)-based communication method, thereby guaranteeing data integrity and continuity, and satisfying conditions such as stable coverage, connection of a larger number of terminals (for example, health care devices), low power, and low costs.

### [Description of Drawings]

FIG. 1 is a diagram for explaining the data flow of a system adopting a hybrid communication device according to an embodiment of the present disclosure.
FIG. 2 is an external appearance perspective view of the hybrid communication device according to the embodiment of the present disclosure.
FIG. 3 is a diagram for explaining a configuration of the hybrid communication device according to the embodiment of the present disclosure.
FIG. 4 is a diagram for explaining an example in which the hybrid communication device according to the embodiment of the present disclosure is disposed in a specific space.

### [Mode for Invention]

The present disclosure can have various modifications and various embodiments, and specific embodiments are illustrated in drawings and described in detail.

However, this is not intended to limit the present disclosure to specific embodiments, and it should be understood to include all modifications, equivalents, or substitutes included in the spirit and technical scope of the present disclosure.

Terms used in this specification are used to describe a specific embodiment, and are not intended to limit the present disclosure. An expression of the singular number includes an expression of the plural number unless clearly defined otherwise in the context. In this application, terms such as "comprises" or "has" are intended to designate the presence of features, numbers, steps, operations, components, parts, or combinations thereof described in the specification, and should be understood as not excluding the probability of the presence or addition of one or more other features, numbers, steps, operations, components, parts or combinations thereof in advance.

All terms used herein, including technical terms or scientific terms, have the same meanings as those commonly understood by a person having ordinary knowledge in the art to which the present disclosure pertains, unless defined otherwise in the specification. Terms, such as those defined in commonly used dictionaries, should be construed as having the same meanings as those in the context of a related technology, and are not construed as ideal or excessively formal meanings unless explicitly defined otherwise in the application.

Hereinafter, preferred embodiments of the present disclosure are described in more detail with reference to the accompanying drawings. In order to facilitate the overall understanding in describing the present disclosure, the same reference numerals are used for the same components in the drawings and a redundant description thereof is omitted.

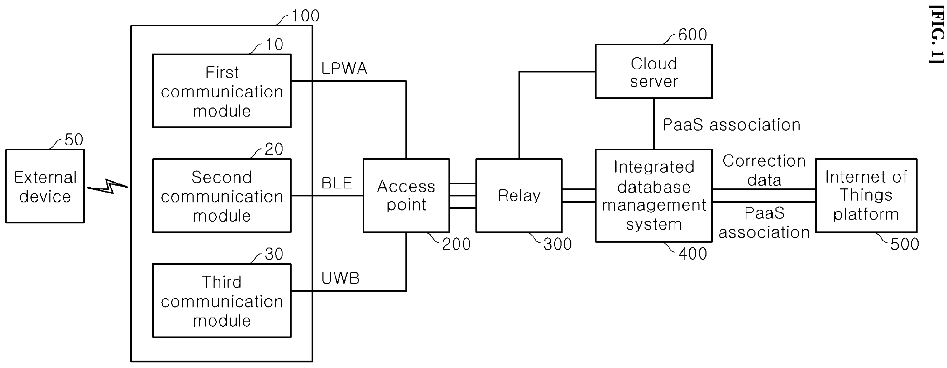

FIG. 1 is a diagram for explaining the data flow of a system adopting a hybrid communication device according to an embodiment of the present disclosure.

The system of FIG. 1 may include an external device 50, a hybrid communication device 100, an access point 200, a relay 300, an integrated database management system (IDMS) 400, an Internet of things platform 500, and a cloud server 600.

The external device 50 is a device that enables a wireless interface with the hybrid communication device 100, and may be, for example, various healthcare devices, smartphones, or the like.

For example, for a wireless interface with the hybrid communication device 100, the external device 50 may include one or more of a communication module (not illustrated) operating in a low-power wide area (LPWA) (for example, SIGFOX)-based communication method, a communication module (not illustrated) operating in a Bluetooth low energy (BLE)-based communication method, and a communication module (not illustrated) operating in an ultra-wideband (UWB)-based communication method.

In FIG. 1, the hybrid communication device 100 can include a plurality of communication modules 10, 20, and 30 and perform multiple communications with the external device 50 and the access point 200.

The first communication module 10 can receive a first signal from the external device 50 by using a first communication method, and transmit the received first signal to the access point 200 by using the first communication method. For example, the first communication method may be the low-power wide area (LPWA)-based communication method, and more preferably, may be a communication method to which a wireless interface technology of SIGFOX is applied.

Of course, since the low-power wide area (LPWA)-based communication method enables communication over a long distance (for example, approximately 10 km) with minimal power, the first communication module 10 can sufficiently communicate indoors and outdoors.

For example, the first communication module 10 can receive the first signal from the surrounding external device 50 through low-power wide area (LPWA). In such a case, the first signal from the external device 50 may include, for example, biometric information. In the embodiment of the present disclosure, the first signal may be referred to as an LPWA signal.

Of course, as needed, the first communication module 10 can also measure the location of the external device 50 through signal exchange with the external device 50. In such a case, the first signal may also include location information and the aforementioned biometric information.

In order for the first communication module 10 adopting the low-power wide area (LPWA) communication method to operate indoors with a SIGFOX wireless interface technology, in particular, an antenna (not illustrated) needs to be small according to a USB-type dongle shape.

The first communication module 10 can be considered to serve as a low-power wide area (LPWA) gateway, and can be mainly used for data communication other than positioning.

The second communication module 20 can receive a second signal from the external device 50 by using a second communication method, and transmit the received second signal to the access point 200 by using the second communication method. For example, the second communication method may be the Bluetooth low energy (BLE)-based communication method.

For example, the second communication module 20 can receive the second signal from the surrounding external device 50 via Bluetooth low energy (BLE). In such a case, the second signal from the external device 50 may include, for example, biometric information. In the embodiment of the present disclosure, the second signal may be referred to as a BLE signal.

Of course, as needed, the second communication module 20 can also measure the location of the external device 50 through signal exchange with the external device 50. In such a case, the second signal may also include location information and the aforementioned biometric information.

In order for the second communication module 20 adopting the Bluetooth low energy (BLE) communication method to operate indoors with a Bluetooth low energy (BLE) wireless interface technology, in particular, an antenna (not illustrated) needs to be small according to a USB-type dongle shape.

The second communication module 20 can be considered to serve as a Bluetooth low energy (BLE) gateway, and can be mainly used for positioning.

The third communication module 30 can receive a third signal from the external device 50 by using a third communication method, and transmit the received third signal to the access point 200 by using the third communication method. For example, the third communication method may be the ultra-wideband (UWB)-based communication method.

For example, the third communication module 30 can receive the third signal from the surrounding external device 50 via ultra-wideband (UWB). In such a case, the third signal from the external device 50 may include, for example, biometric information. In the embodiment of the present disclosure, the third signal may be referred to as a UWB signal.

Of course, as needed, the third communication module 30 can also measure the location of the external device 50 through signal exchange with the external device 50. In such a case, the third signal may also include location information and the aforementioned biometric information.

In order for the third communication module 30 adopting the ultra-wideband (UWB) communication method to operate indoors with an ultra-wideband (UWB) wireless interface technology, in particular, an antenna (not illustrated) needs to be small according to a USB-type dongle shape.

The third communication module 30 can be considered to serve as an ultra-wideband (UWB) gateway, and can be mainly used for positioning.

The access point 200 can be installed indoors in homes, commercial facilities, office facilities, medical facilities, or the like, and is preferably installed in a shaded area as much as possible.

The access point 200 may be, for example, a WiFi router.

The reason why the WiFi router described above can be used as the access point 200 is because the WiFi router has already been widely distributed in homes, commercial facilities, office facilities, medical facilities, or the like. By simply combining the hybrid communication device 100 with such a WiFi router, multiple communications can be simply performed. In addition, this can reduce the initial infrastructure construction costs.

Of course, as needed, a notebook or a PC (desktop) may also be used as the access point 200 instead of a WiFi router. In such a case, the notebook or the PC needs to be installed with a wireless LAN card and a USB port.

When the first signal is received from the first communication module 10, the access point 200 can transmit the received first signal to the cloud server 600 through the relay 300 by using a WiFi communication method.

The first signal may be, for example, a signal using the low-power wide area (LPWA) communication method (more specifically, SIGFOX). For example, the access point 200 may convert the first signal into a WiFi data packet and transmit the WiFi data packet to the cloud server 600. In such a case, the first signal may be transmitted to the cloud server 600 via the relay 300.

On the other hand, when the second signal is received from the second communication module 20, the access point 200 can transmit the received second signal to the integrated database management system (IDMS) 400 by using the WiFi communication method.

The second signal may be, for example, a signal using the Bluetooth low energy (BLE) communication method. For example, the access point 200 may convert the second signal into a WiFi data packet and transmit the WiFi data packet to the integrated database management system (IDMS) 400. In such a case, the second signal may be transmitted to the integrated database management system (IDMS) 400 via the relay 300.

On the other hand, when the third signal is received from the third communication module 30, the access point 200 can transmit the received third signal to the integrated database management system (IDMS) 400 by using the WiFi communication method.

The third signal may be, for example, a signal using the ultra-wideband (UWB) communication method. For example, the access point 200 may convert the third signal into a WiFi data packet and transmit the WiFi data packet to the integrated database management system (IDMS) 400. In such a case, the third signal may be transmitted to the integrated database management system (IDMS) 400 via the relay 300.

Although not illustrated in the drawing, the aforementioned access point 200 may include a conversion module. The access point 200 may convert the first signal, the second signal, or the third signal into a WiFi data packet by the conversion module.

The relay 300 can designate an optimal path for the WiFi data packet (including the first signal, the second signal, or the third signal) from the access point 200. Accordingly, the relay 300 can transmit the WiFi data packet from the access point 200 to the integrated database management system 400 or the cloud server 600.

For example, the relay 300 may transmit the WiFi data packet including the first signal to the cloud server 600, and may transmit the WiFi data packet including the second signal and the WiFi data packet including the third signal to the cloud server 600.

The aforementioned relay 300 may be configured as a network device, for example, a router, a switch, or the like.

The integrated database management system 400 can receive, store, and manage one or more data packets from the access point 200.

On the other hand, the integrated database management system 400 can perform platform as a service (PaaS) association with the cloud server 600 and the Internet of things platform 500.

The Internet of things platform 500 can provide functions such as collection/provision of things data and management and connection of things devices in order to provide various Internet of things-based services.

The Internet of things platform 500 can perform PaaS association with the integrated database management system 400, collect information through an interaction with a plurality of things, and extract more efficient knowledge from the information.

For example, the Internet of things platform 500 can accommodate various things devices and provide common required functions necessary for configuring Internet of things application services. Thus, the Internet of things platform 500 can provide services in various application fields (for example, health (healthcare), construction (smart home), manufacturing (smart factory), agriculture (smart agriculture), energy (smart grid), environment (environmental monitoring), national defense (surveillance and reconnaissance), or the like.).

The cloud server 600 operates like a physical server and can perform similar functions such as data storage and application execution.

The cloud server 600 can be divided into a plurality of virtual servers through virtualization.

The cloud server 600 can receive and store the first signal input through the relay 300.

As needed, the cloud server 600 can provide data requested by a user (for example, an administrator) of the integrated database management system 400.

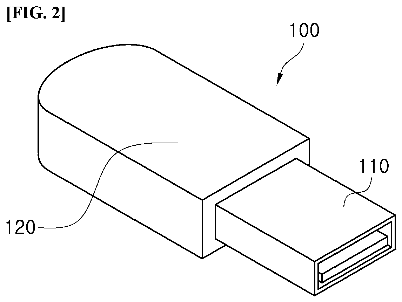

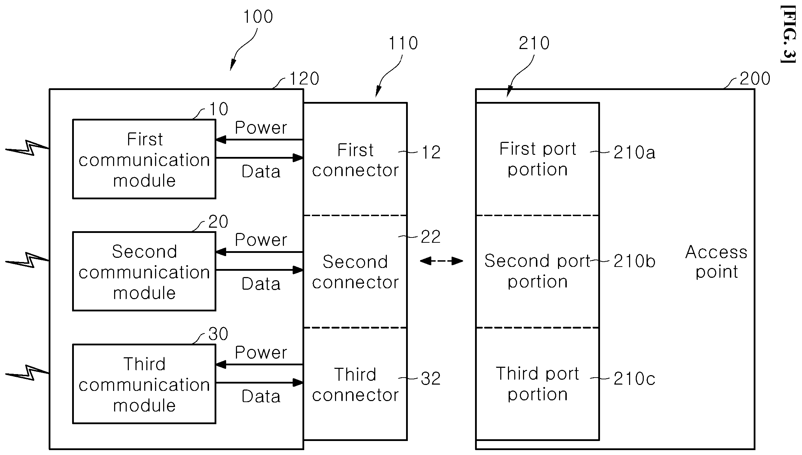

FIG. 2 is an external appearance perspective view of the hybrid communication device according to the embodiment of the present disclosure, and FIG. 3 is a diagram for explaining the configuration of the hybrid communication device according to the embodiment of the present disclosure.

The hybrid communication device 100 according to the embodiment of the present disclosure can be formed in the form of a USB-type dongle.

The first communication module 10, the second communication module 20, and the third communication module 30 of the hybrid communication device 100 can be installed inside a predetermined body 120.

The first communication module 10 may include one or more driver ICs (not illustrated) and passive components (not illustrated) for the operation of a corresponding module. The second communication module 20 may include one or more driver ICs (not illustrated) and passive components (not illustrated) for the operation of a corresponding module. The third communication module 30 may include one or more driver ICs (not illustrated) and passive components (not illustrated) for operation of a corresponding module.

In addition to the aforementioned first communication module 10, second communication module 20, and third communication module 30, the hybrid communication device 100 may additionally include a connector 110 that connects the first communication module 10, the second communication module 20, and the third communication module 30 to a USB port 210 of the access point 200. Of course, the connector 110 and the USB port 210 may also be disconnected.

The connector 110 may be subdivided into a first connector 12, a second connector 22, and a third connector 32.

The first connector 12 can transmit power from the access point 200 to the first communication module 10 and transmit the first signal received from the first communication module 10 to the access point 200 as the connector 110 and the USB port 210 are connected to each other. The connection may mean that the connector 110 is inserted into the USB port 210, so that a power path between the access point 200 and the first communication module 10 and a signal path between the access point 200 and the first communication module 10 are connected.

The second connector 22 can transmit power from the access point 200 to the second communication module 20 and transmit the second signal received from the second communication module 20 to the access point 200 as the connector 110 and the USB port 210 are connected to each other. The connection may mean that the connector 110 is inserted into the USB port 210, so that a power path between the access point 200 and the second communication module 20 and a signal path between the access point 200 and the second communication module 20 are connected.

The third connector 32 can transmit power from the access point 200 to the third communication module 30 and transmit the third signal received from the third communication module 30 to the access point 200 as the connector 110 and the USB port 210 are connected to each other. The connection may mean that the connector 110 is inserted into the USB port 210, so that a power path between the access point 200 and the third communication module 30 and a signal path between the access point 200 and the third communication module 30 are connected.

Of course, the form of the hybrid communication device 100 illustrated in FIG. 2 is merely an example and is not limited thereto. For example, the hybrid communication device 100 may have any form as long as the first communication module 10, the second communication module 20, and the third communication module 30 can be installed inside the body 120, can be provided with the connector 110, and can be connected to (combined with) the USB port 210 of the access point 200.

The USB port 210 of the access point 200 may include a first port portion 210a that is connected and disconnected to/from the first connector 12, a second port portion 210b that is connected and disconnected to/from the second connector 22, and a third port portion 210c that is connected and disconnected to/from the third connector 32.

For example, when the connector 110 of the hybrid communication device 100 is inserted into the USB port 210 of the access point 200, the first connector 12 is connected to (combined with) the first port portion 210a, the second connector 22 is connected to (combined with) the second port portion 210b, and the third connector 32 is connected to (combined with) the third port portion 210c. It can be seen that the connections (combinations) in such a case are made almost simultaneously. That is, the connection (combination) between the first connector 12 and the first port portion 210a, the connection (combination) between the second connector 22 and the second port portion 210b, and the connection (combination) between the third connector 32 and the third port portion 210c are made almost simultaneously.

In FIG. 3, the first connector 12, the second connector 22, and the third connector 32 can be understood as being physically partitioned or spaced apart from one another, and this is done to help with the understanding of description. That is, it is done to easily describe the power reception of each of the communication modules 10, 20, and 30 and the signal transmission in each of the communication modules 10, 20, and 30.

The aforementioned connector 110 may have any configuration as long as it can receive power from the access point 200 through the USB port 210, transmit the power to each of the communication modules 10, 20, and 30, and transmit one or more of the signals of the communication modules 10, 20, and 30 to the access point 200.

Of course, as needed, the first connector 12, the second connector 22, and the third connector 32 can also be configured to be physically partitioned or spaced apart from one another. For example, when only the first communication module 10 needs to be connected to the access point 200, only the first connector (that is, 12) is combined with the USB port 210 (more specifically, the first port portion 210a).

In this way, when the first connector 12, the second connector 22, and the third connector 32 are configured to be physically partitioned or spaced apart from one another, the first port portion 210a, the second port portion 210b, and the third port portion 210c are also configured to be physically partitioned or spaced apart from one another.

On the other hand, in FIG. 3, the first port portion 210a, the second port portion 210b, and the third port portion 210c can be understood as being physically partitioned or spaced apart from one another, and this is done to help with the understanding of description. That is, it is done to easily describe the supply of power to each of the communication modules 10, 20, and 30 and the reception of signals from each of the communication modules 10, 20, and 30.

The aforementioned USB port 210 may have any configuration as long as it can provide power from the access point 200 through the connector 110 and receive one or more of the signals of each communication module 10, 20, and 30 through the connector 110.

In other words, according to the above description, each of the connectors 12, 22, and 32 can be understood as having one power line and one signal line, and each of the port portions 210a to 210c can be understood as having one power pin and one signal pin.

However, instead of being expressed as the three connectors 12, 22, and 32 and the three port portions 210a to 210c described above, the USB port 210 may also include one power pin and three individual signal pins, and the connector 110 may also include three branched power lines and three individual signal lines. In such a case, when the connector 110 is combined with the USB port 210, the one power pin of the USB port 210 and the three branched power lines of the connector 110 are electrically connected. Therefore, power from the access point 200 can be applied to each of the communication modules 10, 20, and 30. In addition, the three individual signal lines of the connector 110 and the three individual signal pins of the USB port 210 are connected to each other in a corresponding manner. Therefore, the signal of each of the communication modules 10, 20, and 30 can be transmitted to the access point 200. Although this is not illustrated in the drawing, those skilled in the art can sufficiently understand the above process with the aforementioned description.

The hybrid communication device 100 having the aforementioned configuration can be automatically activated and operated upon receiving power from the access point 200.

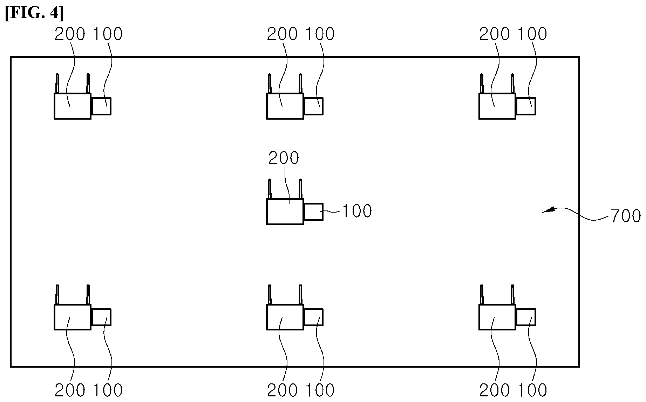

FIG. 4 is a diagram for explaining an example in which the hybrid communication device according to the embodiment of the present disclosure is disposed in a specific space.

The access point 200 (for example, a WiFi router) is assumed to be installed in advance in an arbitrary place 700. The place 700 in FIG. 4 may be an indoor space in a home, an interior of a commercial facility, an office facility, an interior of a medical facility, or the like.

The following description is given on the assumption that the place 700 is the interior of each floor of a hospital.

In this way, the access point 200 (for example, a WiFi router) can be appropriately installed inside each floor of the hospital in consideration of a shaded area. FIG. 4 illustrates an example in which seven access points 200 are installed, but the number of access points 200 is not important, and it is preferable if the access point is installed in each shaded area as much as possible.

Subsequently, the hybrid communication device 100 in the form of a USB-type dongle is connected to (combined with) the USB port 210 of the access point 200. That is, the connector 110 of the hybrid communication device 100 in the form of a USB-type dongle is inserted into the USB port 210 of the access point 200.

In this way, power from the access point 200 is applied to each of the communication modules 10, 20, and 30 of the hybrid communication device 100 through the USB port 210 and the connector 110, so that each of the communication modules 10, 20, and 30 is activated.

Accordingly, the first communication module 10 can receive the first signal from the surrounding external device 50 (for example, a healthcare device or a smartphone). The second communication module 20 can receive the second signal from the surrounding external device 50. The third communication module 30 can receive the third signal from the surrounding external device 50.

When the first signal is received, the first communication module 10 transmits the received first signal to the access point 200. More specifically, the first communication module 10 can put its own identification information, the identification information of a virtual server (that is, a virtual server that is to receive the first signal), or the like into the first signal and transmit the first signal to the access point 200. For example, the first signal may include location information and/or predetermined biometric information. That is, when the external device 50 can perform LPWA communication (for example, SIGFOX communication), the external device 50 transmits the location information and/or the biometric information to the first communication module 10 by using a LPWA communication method (for example, SIGFOX communication method). Accordingly, the first communication module 10 can transmit the received location information and/or biometric information to the access point 200 as the first signal. The access point 200 converts the received first signal into a data packet in the WiFi communication method and transmits the data packet to the cloud server 600 through the relay 300.

The low-power wide area (LPWA) communication method of the first communication module 10 enables communication over a long distance (for example, approximately 10 km) with minimal power, so that, for example, even though the external device 50 is located outdoors other than indoors, the first signal from the outdoor external device 50 can be sufficiently received.

On the other hand, when the second signal is received, the second communication module 20 transmits the received second signal to the access point 200. More specifically, the second communication module 20 can put its own identification information or the like into the second signal and transmit the second signal to the access point 200. For example, the second signal may include location information and/or predetermined biometric information. That is, when the external device 50 can perform BLE communication, the external device 50 transmits the location information and/or the biometric information to the second communication module 20 by using a BLE communication method. Accordingly, the second communication module 20 can transmit the received location information and/or biometric information to the access point 200 as the second signal. The access point 200 converts the received second signal into a data packet in the WiFi communication method and transmits the data packet to the integrated database management system 400 via the relay 300.

On the other hand, when the third signal is received, the third communication module 30 transmits the received third signal to the access point 200. More specifically, the third communication module 30 can put its own identification information or the like into the third signal and transmit the third signal to the access point 200. For example, the third signal may include location information and/or predetermined biometric information. That is, when the external device 50 can perform UWB communication, the external device 50 transmits the location information and/or the biometric information to the third communication module 30 by using a UWB communication method. Accordingly, the third communication module 30 can transmit the received location information and/or biometric information to the access point 200 as the third signal. The access point 200 converts the received third signal into a data packet in the WiFi communication method and transmits the data packet to the integrated database management system 400 via the relay 300.

In the above, the external device 50 is described as being capable of performing only one of the LPWA communication, the BLE communication, and the UWB communication; however, the external device 50 can perform all of the LPWA communication, the BLE communication, and the UWB communication as needed.

As described above, when the USB-type dongle-shaped device 100 capable of performing multiple communications (LPWA communication, BLE communication, UWB communication) is combined with the access point 200 installed in advance, multiple indoor and outdoor communications are simply possible without a separate network construction.

Thus, infrastructure construction costs are significantly reduced. That is, when another network is to be additionally implemented in a space where a WiFi network in the related art has been implemented, an additional network construction needs to be performed. However, since the hybrid communication device 100 needs to be simply combined with an access point (for example, a WiFi router) installed in advance in the embodiment of the present disclosure, infrastructure construction costs are significantly reduced.

In particular, a low-power wide area (LPWA) communication method (for example, SIGFOX) can perform data communication indoors and outdoors without any problems, so that the disadvantages of existing indoor data communication (for example, the unpairing problem of BLE) can be solved. Therefore, positioning can be performed using BLE and UWB, and data communication can be performed using SIGFOX wireless interface technology, so that indoor positioning and data communication can be performed smoothly.

In addition, the first communication module 10 adopts the low-power wide area (LPWA) communication method (for example, SIGFOX), thereby guaranteeing data integrity and continuity, and satisfying conditions such as stable coverage, connection of a larger number of terminals (for example, health care devices), low power, and low costs.

The above description is merely a description of the technical spirit of the present disclosure, and those skilled in the art may change and modify the present disclosure in various ways without departing from the essential characteristic of the present disclosure. Accordingly, the embodiments described in the present disclosure should not be construed as limiting the technical spirit of the present disclosure, but should be construed as describing the technical spirit of the present disclosure. The technical spirit of the present disclosure is not restricted by the embodiments. The range of protection of the present disclosure should be construed based on the following claims, and all of technical spirits within an equivalent range of the present disclosure should be construed as being included in the scope of rights of the present disc.

## Claims

1. A hybrid communication device connected to an access point, the hybrid communication device comprising:
a first communication module configured to receive a first signal from an external device by using a first communication method, and to transmit the received first signal to the access point by using the first communication method;
a second communication module configured to receive a second signal from the external device by using a second communication method, and to transmit the received second signal to the access point by using the second communication method; and
a third communication module configured to receive a third signal from the external device by using a third communication method, and to transmit the received third signal to the access point by using the third communication method,
wherein the hybrid communication device is formed in a form of a USB-type dongle.

2. The hybrid communication device of claim 1, wherein as the connection is made, the first communication module is activated upon receiving power from the access point and transmits the first signal to the access point.

3. The hybrid communication device of claim 1, wherein as the connection is made, the second communication module is activated upon receiving power from the access point and transmits the second signal to the access point.

4. The hybrid communication device of claim 1, wherein as the connection is made, the third communication module is activated upon receiving power from the access point and transmits the third signal to the access point.

5. The hybrid communication device of claim 1, wherein the access point includes a USB port, and the hybrid communication device additionally includes a connector that connects the first communication module, the second communication module, and the third communication module to the USB port.

6. The hybrid communication device of claim 5, wherein as the connector is connected to the USB port, the connector transmits power from the access point to the first communication module, the second communication module, and the third communication module, and transmits one or more of the first signal, the second signal, and the third signal to the access point.

7. The hybrid communication device of claim 6, wherein the connector comprises:
a first connector configured to transmit the power from the access point to the first communication module and transmit the first signal to the access point as the connector is connected to the USB port;
a second connector configured to transmit the power from the access point to the second communication module and transmit the second signal to the access point as the connector is connected to the USB port; and
a third connector configured to transmit the power from the access point to the third communication module and transmit the third signal to the access point as the connector is connected to the USB port.

8. The hybrid communication device of claim 1, wherein the first communication method is a low-power wide area (LPWA)-based communication method,
the second communication method is a Bluetooth low energy (BLE)-based communication method, and
the third communication method is an ultra-wideband (UWB)-based communication method.

9. The hybrid communication device of claim 1, wherein when the first signal is received from the first communication module, the access point transmits the received first signal to a cloud server by using a WiFi communication method,
when the second signal is received from the second communication module, the access point transmits the received second signal to an integrated database management system by using the WiFi communication method, and
when the third signal is received from the third communication module, the access point transmits the received third signal to the integrated database management system by using the WiFi communication method.
